# FASCICULE DE BREVET EUROPEEN

(11) **EP 1 682 698 B1**
(45) Date de publication et mention de la délivrance du brevet: **06.03.2019**
(21) Numéro de dépôt: 04805401.9
(22) Date de dépôt: 05.11.2004
(51) Int. Cl.: C23F 13/04, C04B 32/02, C25D 9/08, E02B 3/04

(54) **PROCEDE POUR LA FORMATION DE CIMENT OU BETON PAR ELECTROLYSE**
VERFAHREN ZUR HERSTELLUNG VON ZEMENT ODER BETON DURCH ELEKTROLYSE
METHOD FOR FORMING CEMENT OR CONCRETE BY ELECTROLYSIS

(30) Priorité: 07.11.2003 FR 0350816
(43) Date de publication de la demande: 26.07.2006
(73) Titulaire: Geocorail, 13016 Marseille (FR)
(72) Inventeur: Vedrenne, Bernard, 75008 Paris (FR); Scharr, Pierre-Joseph, 75004 Paris (FR)
(74) Mandataire: Loyer & Abello
(86) Numéro de dépôt international: PCT/FR2004/002853
(87) Numéro de publication internationale: WO 2005/047571

(56) Documents cités:
- FR-A- 2 539 146
- FR-A- 2 762 861
- US-A- 4 246 075
- US-A- 4 623 433
- US-A- 5 543 034
- DATABASE WPI Section Ch, Week 198310 Derwent Publications Ltd., London, GB; Class L02, AN 1983-24734K XP002368183 & SU 925 894 B (ALMA CONS MAT RES) 7 mai 1982 (1982-05-07)
- Helmut Schuhmacher ET AL: "BULLETIN OF MARINE SCIENCE INTEGRATED ELECTROCHEMICAL AND BIOGENIC DEPOSITION OF HARD MATERIAL-A NATURE-LIKE COLONIZATION SUBSTRATE", , 1 January 1994 (1994-01-01), XP055281731, Retrieved from the Internet: URL:http://docserver.ingentaconnect.com/de liver/connect/umrsmas/00074977/v55n2/s34.p df?expires=1466411523&id=87494762&titleid= 10983&accname=European+Patent+Office&check sum=55C4E23C949F231B1C3EF2C8EC460000 [retrieved on 2016-07-14]

## Description

L'invention concerne un procédé de formation de ciment ou béton par électrolyse d'un milieu saumâtre.

L'invention vise notamment à améliorer les caractéristiques de ce matériau et à contrôler son efficacité, en particulier pour la stabilisation du trait de côte et/ou la création ou la pérennisation d'ouvrages naturels ou artificiels en bord de mer, ou en eau douce ou saumâtre.

On sait que la structure métallique formant la partie cathodique d'un système d'électrolyse, au contact avec un milieu marin ou saumâtre, se recouvre d'un dépôt de sels, appelé par les spécialistes « calco-magnésien », provoqué par la précipitation sur cette structure d'ions salins, notamment CaCO₃ (carbonate de calcium) et Mg(OH)₂ (hydroxyde de magnésium), dissous dans l'eau de mer ou dans l'eau saumâtre des lagunes. On a déjà proposé d'utiliser cette électrolyse pour réaliser des ouvrages en béton armé.

On connaît la capacité de ce dépôt à former un agrégat mou ou moyennement consistant lorsqu'il se mélange avec des particules de sable, des débris de coquillages, de petits cailloux ou galets qui composent le milieu, généralement le fond marin, sur lequel repose la structure métallique formant cathode du système. Cet agrégat peut présenter les caractéristiques d'un ciment et/ou d'un béton grâce à l'apport de différents éléments, minéraux ou non, notamment les constituants du milieu.

Jusqu'à présent, il n'existe pas de procédé ou système permettant de favoriser, tout en la contrôlant (ou de réguler) la constitution d'un tel ciment et/ou béton, que nous appelons Géo-ciment/Géo-béton Naturel, destiné à la protection, à la consolidation ou au renforcement :
- du littoral marin ou lagunaire, formé de plages de sable ou de galets, bordées ou non de dunes ou de falaises, sablonneuses ou en terre, crayeuses ou rocheuses, et comportant ou non des installations à usage industriel ou d'habitation, et
- des ouvrages naturels ou artificiels tels que remblais, cordons littoraux formés de dunes légères, digues, ouvrages textiles semi-étanches pour la retenue du sable, protégeant le littoral des phénomènes d'érosion provoqués par les mouvements de la mer, par les éclaboussures des vagues lors des tempêtes ou des marées, par les courants marins et par les rafales de vent chargées ou non d'embruns salés,
- des sites d'habitation ou à usage industriel, bâtis sur des remblais, protégés ou non par des rideaux de palplanches, ou sur pilotis dans des zones marécageuses, en bord de mer, sur des lacs ou sur des lagunes.

Le brevet US 4,623,433 divulgue un procédé de formation de concrétion dans un environnement marin à l'aide d'anodes sacrificielles comprenant une variation de densité de courant favorisant d'abord la formation de brucite seule puis la dissolution contrôlée de la brucite simultanément à la formation de calcaire.

Le brevet US 5,543,034 divulgue un procédé visant à améliorer des dépôts calcaires sous-marins à l'aide d'un dispositif d'électrolyse.

L'invention concerne un procédé de formation d'un Géo-ciment/Géo-béton Marin Naturel dans un milieu électrolytique, selon la revendication 1. Il est divulgué un procédé de formation d'un Géo-ciment /Géo-béton Marin Naturel selon lequel :
- on dispose une structure métallique conductrice formant cathode dans un milieu électrolytique comprenant des éléments minéraux désagrégés,
- on dispose une anode dans le milieu électrolytique à une certaine distance de la structure métallique conductrice, et
- on établit un courant électrique continu entre l'anode et la structure métallique conductrice formant cathode, de manière à permettre la polarisation cathodique de la structure, entraînant un échauffement de celle-ci, une élévation du pH, et un dégagement de CO₂, un déplacement des équilibres ioniques et une sursaturation en CaCO₃ et en Mg(OH)₂ suivie de leur précipitation, contribuant à la création d'un dépôt minéral formant agrégat autour de la structure métallique conductrice soumise à cette polarisation cathodique.

La composition de cet agrégat varie considérablement en fonction du pH du milieu au contact avec la structure, pH qui détermine les taux de sursaturation de CaCO3 et de Mg(OH)2 qui se présentent, dans une eau de mer à 20°C, dans une proportion [CaCO3 / Mg(OH)2] d'une valeur de l'ordre de 1/10 en masse pour pH=9,4 à une valeur d'environ 10/1 pour pH=10,6.

On a observé que l'agrégat ainsi formé par déposition électrochimique présentait systématiquement une consistance molle et gélatineuse lorsque sa composition montrait un taux élevé d'Hydroxyde de Magnésium déposé (ou brucite), de formule chimique Mg(OH)₂, par rapport au taux de Carbonate de Calcium déposé ou aragonite (dans les conditions opératoires considérées, le carbonate de calcium se dépose essentiellement sous la forme cristalline appelée aragonite), de formule chimique CaCO₃. On a découvert qu'un tel agrégat à consistance molle présentait la propriété de favoriser l'amalgame avec du sable, des éléments minéraux ou d'autre nature, présents naturellement dans le milieu ou artificiellement ajoutés à proximité de la structure métallique formant cathode. Enfin, on a constaté que, à l'inverse, l'agrégat présentait une consistance de plus en plus dure à mesure que le taux d'aragonite augmentait par rapport à celui de la brucite dans l'opération de dépôt électrochimique. On a observé qu'une dureté maximale de l'agrégat était obtenue pour un ratio [CaCO3 / Mg(OH)2] en masse compris dans une fourchette de valeurs allant de 5 à 20. En résumé, la composition de l'agrégat et sa consistance vont présenter des caractéristiques variables en fonction des cinétiques de précipitation et de redissolution éventuelle de la brucite, et de la cinétique de précipitation de l'aragonite qui, elle, ne se redissout pas.

Selon l'invention, on pilote ces cinétiques à partir des paramètres principaux suivants : densités de courant de polarisation cathodique appliquées à la structure, potentiels cathodiques atteints par cette structure, température de l'eau ou de l'électrolyte, et durée d'application à la structure des densités de courant correspondantes.

Afin d'obtenir, dans chaque cas particulier d'ouvrage traité, les caractéristiques les meilleures en matière de composition, de consistance et de durabilité de l'agrégat de Géo-ciment/Géo-béton Naturel, le pilotage est effectué en agissant sur les valeurs des densités de courant mises en oeuvre sur la structure cathodique, et sur la durée de mise en oeuvre de ces densités de courant, à partir des valeurs du potentiel de polarisation cathodique atteint par la structure et de celles du pH mesuré au voisinage de la structure, mesurées en permanence par l'intermédiaire de capteurs installés à proximité de la structure, et en fonction des paramètres du milieu dans lequel se trouve la structure, en particulier en fonction de la température, de la composition de ce milieu (notamment sa salinité), de son aération et de son agitation.

A la suite de divers travaux, effectués sur site ou en laboratoire, on a constaté que les conditions de la précipitation de la brucite étaient peu affectées par la température. Par exemple, à une température de 5°C, la précipitation de la brucite commence progressivement pour un potentiel de polarisation de la structure inférieur ou égal à - 1000mV/ECS et pour une valeur du pH d'environ 9,4. A une température de 20°C, elle commence à se produire pour un potentiel de polarisation de la structure supérieur ou égal à - 950mV/ECS et pour une valeur du pH voisine également de 9,4. Pour des valeurs du potentiel de polarisation de la structure croissant de -1000 à -1200mV/ECS, le dépôt de brucite se fera de plus en plus rapidement. Il est à remarquer que ce dépôt sera plus rapide que celui de l'aragonite, bien que commençant à une valeur de pH supérieure.

Dans le cas de l'aragonite, en effet, la précipitation est plus lente et fortement affectée par la température. Ainsi, à 5°C, le dépôt d'aragonite commence à être observable seulement après 48 heures environ, pour une valeur du potentiel de polarisation de la structure inférieure ou égale à -1000mV/ECS et pour une valeur du pH d'environ 8,65. Tandis qu'à 20°C, la précipitation de l'aragonite commence à être visible déjà après 4 à 6 heures, sous un potentiel de polarisation de la structure de -950mV/ECS et à un pH d'environ 8,35. On rappelle que le pH de l'eau de mer est d'environ 8,2 à cette température.

Enfin, il est important de noter que le précipité de brucite commence à se redissoudre si l'on favorise une redescente du pH en dessous de la valeur de 9,4, alors que l'aragonite ne se redissout jamais.

Le procédé selon l'invention met en oeuvre les trois phases suivantes.

Phase 1) : on impose une densité de courant entraînant la polarisation négative de la structure et la précipitation progressive de la brucite et de l'aragonite contenues dans l'eau de mer ou dans l'électrolyte au contact avec la structure, avec formation d'un agrégat mou appelé « agrégat primaire ».

Phase 2) : on forme un conglomérat relativement mou, par agglomération à l'agrégat primaire d'éléments minéraux ou non, présents originellement dans l'électrolyte à proximité de la structure ou rajoutés à proximité immédiate de celle-ci.

Phase 3) : on abaisse la densité du courant de polarisation jusqu'à obtention d'un pH compris entre 8,35 environ (suivant la température de l'eau) et 9,4, cette phase 3) permettant la redissolution d'une partie importante de la brucite, tout en maintenant les conditions nécessaires à une continuation du dépôt d'aragonite. On réalise ainsi le durcissement progressif du conglomérat à mesure que le ratio (CaCO₃ sur Mg(OH)₂) se rapproche d'une valeur comprise entre 5 et 20, et ceci jusqu'à obtention des caractéristiques recherchées pour le Géo-ciment/Géo-béton Naturel dans le cas considéré.

La divulgation concerne aussi un système de régulation interactive, relié à des capteurs et destiné à piloter le processus de formation du Géo-ciment/Géo-béton Naturel. Les capteurs installés sur la structure et dans son environnement immédiat servent à relever en temps réel les paramètres suivants : la salinité, la composition et la température de l'électrolyte, le pH au voisinage immédiat de la structure, le potentiel de polarisation/ECS de la structure ou d'un barreau témoin, éventuellement et suivant la configuration, la vitesse de l'électrolyte, et pour certaines configurations, la pression et le degré hygrométrique. D'autres capteurs peuvent mesurer la compacité et la dureté du dépôt.

Les variables commandées par le système de régulation sont : l'intensité et la tension des courants de polarisation à la sortie des générateurs de courant et plus précisément les caractéristiques des cycles imposés aux courants de polarisation (forme du signal, intensité maximale et minimale, tension maximale et minimale, périodicités). Ces cycles de courant ont pour effet de permettre le déroulement du processus électrochimique et le maintien, lors de chaque phase, des valeurs des paramètres de la formation du Géo-ciment/Géo-béton Naturel dans les limites favorables, et d'éviter les dysfonctionnement comme, par exemple, le décollement du dépôt cathodique par un fort dégagement d'hydrogène causé par une polarisation cathodique trop importante.

Dans certaines configurations, notamment dans les zones de marnage ou dans les parties aériennes d'une falaise, le système de régulation soumet le démarrage et l'arrêt du processus de formation du Géo-ciment/Géo-béton Naturel au résultat des mesures des capteurs de pression et d'hygrométrie. De la sorte, les courants de polarisation en vue de la formation du Géo-ciment/Géo-béton Naturel ne sont appliqués à la structure cathodique que durant certaines périodes de temps, en particulier à marée montante ou lors de mouvements d'écluses, au cours desquelles les zones à consolider, les parties du sol côtier, les ouvrages artificiels, les falaises ou les éperons rocheux concernés, sont léchés par les vagues ou immergés, en partie ou totalement, ou, dans le cas de parties aériennes, simplement éclaboussés par les vagues ou environnées d'embruns.

Lors de la marée descendante ou lors d'une diminution du niveau de l'eau ou des embruns, les mêmes capteurs délivrent des signaux qui permettent d'enclencher une nouvelle phase du procédé, par exemple le lessivage de l'installation par arrosage à l'eau saumâtre ou douce, lorsque les parties concernées du littoral, la côte, ou les ouvrages à protéger ne seront plus baignés par la mer ou environnés d'embruns, de façon à réguler la formation du Géo-ciment/Géo-béton Naturel.

Pour piloter et réguler le processus de formation et de maintien dans le temps du Géo-ciment/Géo-béton Naturel, durant ces périodes, le fonctionnement du système de régulation du processus sera ainsi asservi au résultat des mesures effectuées par des capteurs de pression installés aux emplacements adéquats pour détecter la montée du niveau de l'eau ou sa descente, en particulier lors du mouvement des marées et lors des éclusages. Piloté de cette façon, le système de régulation ne fera débiter de courant de polarisation que lorsque la mer baignera, ou que les embruns envelopperont, en tout ou partie et de façon continue ou périodique, les ouvrages sur lesquels on souhaite favoriser et/ou contrôler la formation de Géo-ciment/Géo-béton Naturel.

Les courants mis en oeuvre par le procédé pourront évoluer entre des valeurs comprises entre 0,1 Ampère et quelques dizaines ou centaines d'Ampères ou davantage, et seront délivrés sous des tensions comprises entre 0,1 Volt et quelques dizaines de Volts ou davantage,
- soit par un générateur de courant continu alimenté par le réseau de distribution d'électricité,
- soit par combinaison de panneaux solaires reliés à un système de batteries tampon,
- soit par une ou plusieurs éoliennes reliées à un système de batteries tampon,
- soit par un ou plusieurs générateurs d'électricité installés sur des bouées flottantes et mus par les forces marémotrices ou par les mouvements de la houle et reliés à un système de batteries tampon,
- soit par une combinaison de deux ou de plusieurs des types d'alimentations ci-dessus.

Les alimentations électriques délivrant ces courants sont commandées par le système de régulation décrit précédemment. Ce système est programmé de façon à délivrer dans le circuit « anode - cathode », une succession de cycles de courant dont le choix sera déterminé en temps réel par la valeur des mesures effectuées par les différents capteurs. Durant chacun de ces cycles, le courant et la tension pourront varier indépendamment ou non, par exemple suivant des lois sinusoïdales de périodes comprises entre 1 heure et 12 heures ou davantage. Certains cycles de courant pourront fonctionner en polarité inverse.

De même, grâce au pilotage par capteurs, le procédé de régulation en intensité et en tension des courants imposés de polarisation cathodique suivant un ou plusieurs cycles de 1 heure à 12 heures, ou davantage, pourra être mis en oeuvre pour favoriser, réguler et contrôler la formation de Géo-ciment/Géo-béton Naturel sur un fond marin ou lagunaire ou dans un environnement d'eau douce, par exemple fleuve ou rivière, lac ou retenue d'eau, sur des ouvrages situés en pleine eau en permanence, ou de façon périodique ou épisodique.

Le système de régulation permet un pilotage à distance du procédé mis en oeuvre sur plusieurs sites éloignés.

Les différents systèmes de régulation pilotant le procédé sur des sites espacés, peuvent être gérés par un ou plusieurs systèmes experts régionaux qui, par interrogation cyclique des sites correspondants et acquisition progressive puis intégration des données relevées, sont capables :
1) de communiquer sur l'état de fonctionnement des systèmes distants auxquels ils seront reliés,
2) d'agir en rétroaction en fonction des données nouvellement acquises pour commander, soit des réglages locaux tenant compte de l'acquis antérieur de tel ou tel site, soit une remise en route en cas d'incident et une réinitialisation du processus de pilotage, soit le lancement d'une procédure de dépannage,
3) d'établir des statistiques des actions engagées et des résultats déjà atteints relatifs à l'ensemble des différents systèmes installés, et de tenir à jour le tableau de bord des expérimentations en cours.

Le procédé selon l'invention est applicable à la stabilisation des bords de mer érodés par les courants, les marées et les éléments, à la consolidation d'ouvrages artificiels en bord de mer, et au renforcement de falaises érodées ou d'éperon rocheux déstabilisés au contact avec l'eau de mer.

L'application du procédé selon l'invention de formation du Géo-ciment/Géo-béton Naturel, employé seul ou en combinaison avec d'autres procédés de rechargement des plages de sable ou de galets, favorise et permet de contrôler dans leurs différentes phases, la constitution, la prise et le développement progressif du Géo-ciment/Géo-béton Naturel sur un grillage léger destiné à protéger, consolider ou maintenir en place la couche superficielle de sable ou de galets régulièrement emportée par la mer lors des tempêtes ou des marées d'équinoxe.

Il devient ainsi possible de stabiliser et même de consolider et de reconstituer à partir d'une barrière naturelle légère:
- le trait de côte formé de plages de sable ou de galets, les côtes bordées d'ouvrages artificiels en pierre, rochers, remblai, les pieds de falaises rocheuses ou constituées d'un agglomérat de terre, de craie et de rochers,
- les ouvrages artificiels, et
- les falaises ou les zones rocheuses bordant le littoral, en particulier dans les zones de marnage ou dans les endroits sujets aux dégradations provoquées par les éclaboussures des vagues ou baignées dans une atmosphère agressive chargée d'embruns marins.

Le système divulgué comporte une structure polarisée cathodiquement qui peut être constitué, suivant les cas de :
- Grillage en acier noir nu, galvanisé ou non, cuivré en tout ou partie ou non, recouvert ou non d'un métal ou d'oxydes métalliques de potentiels électrochimiques adéquats,
- Métal déployé ou ajouré de même constitution que le grillage ci-dessus,
- Micro-Pieux métalliques de soutènement d'ouvrages installés sur des fonds instables,
- Tire-Fonds de renfort de quais maritimes en palplanches,
- Aiguilles métalliques ou en matière conductrice, en forme de peigne ou de râteau, cavaliers, crochets, pitons, destinés à faciliter l'accrochage en aérien des structures cathodiques aux falaises et rochers ou aux ouvrages artificiels à consolider, ou d'une
- Combinaison des différentes structures cathodiques et géométries ci-dessus.

Dans le cas d'un sol partiellement ou totalement sablonneux ou caillouteux, meuble ou ferme, on prévoit que la structure cathodique soit, en tout ou partie, enfouie dans la ou les parties du sol, sec ou mouillé, à consolider, stabiliser, renforcer ou à reconstituer.

Dans le cas d'un enrochement naturel ou artificiel, ou d'une construction en pierre, ciment ou béton, armés ou non, on prévoit que la structure cathodique est appliquée à la paroi et dans les interstices des ouvrages à protéger, et maintenu par agrafage mécanique direct au contact de cette paroi à l'aide de cavaliers, pitons, crochets, métalliques ou non.

On prévoit également que la structure cathodique est, dans certains cas, pour partie enterrée dans la partie sableuse ou caillouteuse du sol, et pour le reste, appliquée ou fixée à la paroi de l'ouvrage naturel ou artificiel à protéger.

Ainsi, le procédé selon l'invention permet de favoriser et de contrôler, et donc de réguler, dans sa composition et dans sa densité de répartition sur une structure cathodique appropriée à chaque cas particulier, la formation du Géo-ciment/Géo-béton Naturel de part et d'autre de la zone de jonction entre la partie du sol sablonneuse ou en galets, et la dune ou la partie de la côte formée de rochers ou prolongée par un ouvrage artificiel,
soit :
- Directement au contact du sol bordant le littoral maritime, sable, vase, rocher, galets, éboulis de falaises, falaise, dune, récif ou barrière de corail,
soit :
- Au contact d'un ouvrage artificiel à la mer, neuf ou ancien, dégradé ou non, renforcé ou non par une armature métallique, en ciment ou en béton armés ou non, en pierre ou en terre, rochers, tétrapodes, agrégat, tel que épi, éperon, remblai, levée de terre à usage commercial, d'habitation ou industriel, routier, portuaire, ferroviaire ou aéronautique, ponton, pile de pont, digue, enrochement, polder, marais salant, retenue d'eau,
soit :
- Au contact d'un éperon rocheux ou d'une falaise, composite ou non, en terre ou rocheuse ou calcaire,
soit :
- A cheval sur le sol bordant l'ouvrage artificiel, l'éperon rocheux ou la falaise considérée, et sur le pied de l'ouvrage artificiel, l'éperon rocheux ou la falaise considérée.

La formation du Géo-ciment/Géo-béton Naturel peut être favorisée et contrôlée soit à la base de l'ouvrage artificiel, de l'éperon rocheux ou de la falaise considérée, soit en oblique ou en élévation, en surface, dans les interstices, en surface ou dans la masse même de l'ouvrage artificiel, de l'éperon rocheux ou de la falaise considérée, que ce soit à la construction de l'ouvrage ou plus tard, en rénovation, reconstitution, stabilisation, protection, renforcement ou consolidation.

Suivant le résultat recherché, les différentes structures cathodiques ci-dessus, qu'elles soient aériennes ou immergées, peuvent être,
soit :
- nues et fixées sur les parois des ouvrages artificiels ou naturels à consolider ou à recouvrir de Géo-ciment/Géo-béton Naturel,
soit :
- maintenues au contact ou à proximité de ces ouvrages par des filets métalliques ou non, du type des protections utilisées dans les zones d'éboulements rocheux ou pour le maintien des talus autoroutiers,
soit :
- recouvertes d'un seul côté, ou des deux côtés, d'une enveloppe perméable à l'eau mais semi-étanche de façon à ne pas laisser filtrer son contenu. Cette enveloppe est réalisée en fibres naturelles ou synthétiques, tissée ou non-tissée, armée ou non de fils métalliques ou autres, formant une sorte de sandwich autour de la structure cathodique à la façon d'une housse mince. Elle est en mesure d'être remplie, en partie ou en totalité, par un ballast formé de sable, coquillages, gravier, galets, cailloux, destinés à s'agglomérer au mélange de Carbonate de Calcium, d'Hydroxyde de Magnésium, de Silicates, Aluminates et d'autres ions salins notamment ferreux, déposés naturellement sur les structures cathodiques du système par l'effet des courants de polarisation imposés par le procédé selon l'invention.

Pour accélérer la formation du Géo-ciment/Géo-béton Naturel autour des structures cathodiques du système, on prévoit également que le ballast de remplissage de l'enveloppe semi-étanche perméable à l'eau ci-dessus pourra comprendre, totalement ou partiellement, un mélange de certains des sels constitutifs de l'eau de mer, dosés de façon spécifique suivant les diverses applications du procédé, y compris principalement du Carbonate de Calcium, de l'Hydroxyde de Magnésium, des Silicates, des Aluminates et d'autres sels, ainsi que les constituants du mortier, du ciment et du béton, aériens ou hydrauliques.

Dans le procédé selon l'invention, la structure cathodique, recouverte ou non d'une enveloppe contenant un ballast, peut être soit enterrée ou ensouillée, posée sur un fond sableux ou rocheux, à l'horizontale, en oblique ou à la verticale, suspendue en pleine eau accrochée par exemple à des bouées ou à des cordages. Elle peut également être installée en parties aériennes, accrochée à différents supports destinés à être consolidés.

Le procédé selon l'invention est également applicable à la consolidation d'ouvrages artificiels en bord de mer, et au renforcement de falaises érodées ou d'éperons rocheux déstabilisés qui ne sont pas en contact avec l'eau de mer.

Comme mentionné ci-dessus, la formation de Géo-ciment/Géo-béton Marin Naturel sur une structure cathodique au contact avec l'eau de mer est provoquée par le dépôt d'ions dissous dans l'eau de mer mélangé à divers composants présents localement, sable et fragments de coquillages.

Le procédé selon l'invention peut également être mis en oeuvre sur des ouvrages artificiels ou naturels, tels que falaises érodées ou éperons rocheux déstabilisés, qui ne seraient jamais (ou seulement épisodiquement) en contact avec l'eau de mer ni environnés d'embruns en quantité suffisante pour permettre le dépôt des ions salins constitutifs.

En pareil cas, le procédé selon l'invention comprend l'arrosage artificiel intermittent de la paroi à renforcer avec de l'eau de mer, de l'eau saumâtre ou de l'eau douce, comportant l'addition d'éléments minéraux désagrégés tels que notamment silicates, aluminates, carbonate de calcium, chlorure de magnésium, magnésie, ainsi que des différents sels que l'on trouve dans l'eau de mer.

Cet arrosage est commandé par un système de régulation interactive, relié à des capteurs qui lui transmettent les valeurs de différents paramètres mesurés sur la structure et dans l'électrolyte, au voisinage immédiat de la structure. Ces valeurs déterminent les cycles prédéfinis de courants de polarisation qui sont commandés par la régulation, suivant ou non un cycle voisin de celui des marées. On permet ainsi le dépôt d'ions salins qui iront former le Géo-ciment/Géo-béton Naturel sur la structure cathodique du système installée dans une enveloppe perméable semi-étanche, en se mélangeant au ballast contenu dans cette enveloppe, le tout accroché à l'ouvrage artificiel ou naturel à consolider. On peut commander successivement des cycles d'arrosage par de l'eau salée comme précédemment, ou par de l'eau pure ou saumâtre, afin de favoriser en cas de besoin la dissolution de l'Hydroxyde de Magnésium en excès.

Le procédé est applicable à l'endigage de rivières côtières, à la consolidation de polders ou à la création de chenaux d'accès.

La mise en oeuvre du procédé à des structures cathodiques constituées de grillages adaptés couvrant par endroits la rive et les berges des rivières, ou matérialisant le lit d'un chenal d'accès à un port, ou constituant à la base des polders, coté terre ou côté mer, un écran infranchissable aux rongeurs, permet de stabiliser ces différents ouvrages face à l'effet des courants marins ou des agressions animales.

Le procédé est applicable à la création de fermes sous-marines.

L'application du procédé de régulation à divers canevas métalliques légers, constitués de grillages par exemple suspendus en pleine eau et accrochés à des bouées ou des filins, et auxquels il aura été donné des formes et des volumes appropriés aux habitudes de la faune marine, permet la création de véritables fermes sous-marines donnant aux poissons et aux crustacés la possibilité de s'établir et de proliférer.

Le procédé est applicable à la consolidation d'ouvrages sur pieux ou pilotis construits en bord de mer, sur des lagunes ou des marécages, ou à la consolidation des pieux eux-mêmes.

Le procédé selon l'invention est applicable à la stabilisation, au renforcement ou à la réparation de plates-formes pétrolières installées dans des eaux profondes ou peu profondes, saumâtres ou salées.

Un certain nombre de bâtiments publics ou privés, à usage individuel, collectif ou industriel, ont été construits soit sur la mer, soit sur des terrains asséchés repris sur la mer, soit sur des sites lagunaires ou marécageux. Ils reposent directement sur le fond, ou sur des pieux enfoncés dans le sous-sol qui n'atteignent souvent pas la roche susceptible de leur assurer une stabilité suffisante et durable. Soumis aux attaques des diverses pollutions des sites concernés, ces ouvrages se dégradent avec le temps. De plus, ils s'enfoncent progressivement sous l'effet de la pression exercée par les structures qu'ils soutiennent, ce qui met en péril la pérennité même de ces structures.

Dans les différents cas rencontrés, grâce à la souplesse de son utilisation, le procédé selon l'invention appliqué à des structures cathodiques adaptées, tels que des grillages entourant les ouvrages proprement dits ou leurs pieux de soutènement, qu'ils soient en bois, en béton armé ou en métal recouvert ou non de ciment, permet la consolidation de ces ouvrages ou de ces pieux et le maintien durable de la stabilité des ouvrages qu'ils supportent.

Le même principe peut être appliqué aux pieux en bois qui servent à l'amarrage des bateaux, tels que ceux que l'on utilise à Venise pour l'amarrage des gondoles. Lorsqu'il s'agit de recouvrir des pieux en bois, en béton armé, ou en métal recouvert ou non de ciment, l'entourage de ces pieux peut épouser une forme évasée vers le bas, en forme de « patte d'éléphant » destinée à diminuer la pression exercée sur le fond et à donner une plus grande stabilité à l'ensemble formé par les pieux recouverts de Géo-ciment/Géo-béton Naturel et les superstructures que ces pieux soutiennent, en particulier lorsque le fond marin ou lagunaire sera vaseux, meuble ou comportant des cavités. Il est également possible d'ajouter à l'ensemble soubassement et superstructure, des micro pieux de soutènement enfoncés jusqu'à la roche dure, auxquels on applique le procédé selon l'invention afin de renforcer l'assise des superstructures à consolider.

Pour diminuer la densité de l'ensemble « pieux + Géo-ciment/Géo-béton Naturel » et alléger la pression qu'exerce sur le fond cet ensemble et la superstructure qu'il soutient, on peut recouvrir le grillage formant la structure cathodique à l'aide de l'enveloppe décrite précédemment qui est remplie d'un ballast de densité inférieure à la densité de l'eau ou à celle du fond marin ou lagunaire. En plus des éléments de remplissage cités précédemment, et pour diminuer la densité du conglomérat qui va se former autour de la structure cathodique, on peut utiliser comme ballast de remplissage de l'enveloppe de la structure, des matériaux volcaniques tels que la pierre ponce ou la pouzzolane, ou des matériaux organiques tels que des résidus de bois ou de liège, la laine de verre ou la laine de roche, ou des matériaux synthétiques tels que du polystyrène ou d'autres matières plastiques de faible densité, ou encore des matelas de bulles d'air enfermées dans une enveloppe plastique.

Le procédé est applicable à la consolidation des ouvrages de soutènement de carrières, de mines ou de cavités diverses.

Les infrastructures métalliques de soutènement des diverses cavités naturelles ou artificielles telles que carrières ou mines en activité ou abandonnées, peuvent être ancrées dans la roche mère par la mise en oeuvre du procédé sur ces infrastructures, qu'elles soient accessibles ou non, ce qui consolide de façon durable les cavités en question.

Certaines îles de petites dimensions, constituées par des récifs coralliens ou par des atolls volcaniques, émergent seulement de quelques dizaines de centimètres et risquent de disparaître de la surface avec la montée continue du niveau des océans. Le procédé selon l'invention permet de rehausser ces îles.

Le procédé peut être combiné sur certains sites avec la prolifération des algues coralliennes, notamment des algues calcaires et en particulier celles qui appartiennent à la famille des algues Lithothamniées. L'apport de matières minérales provoqué par le processus organique de reproduction des algues à partir des minéraux dissous dans l'eau de mer, combiné au procédé de formation du Géo-ciment/Géo-béton Marin Naturel accélère le rehaussement de ces îles tout en y favorisant le développement de la faune marine.

Le procédé selon l'invention est applicable à la réalisation d'obstacles sous marins de formes calculées, destinés à briser la houle et à réduire ses effets destructeurs et déstabilisants sur tous les ouvrages à la mer et notamment à la base de falaises déjà fortement érodées. Ces obstacles sont fixés au fond marin par des tire-fonds et comportent une partie métallique supérieure réalisée en grillage fort ou en métal déployé ou ajouré afin de laisser passer une partie du flot tout en déviant vers le haut une partie de la vague et en lui faisant perdre une grande quantité de son énergie horizontale. L'obstacle métallique constitue la structure cathodique du système selon l'invention et se recouvre progressivement et de façon contrôlée de Géo-ciment/Géo-béton Marin Naturel, ce qui améliore sa capacité à briser la houle.

Le procédé est applicable à la création de rochers artificiels ou d'écrans de formes et d'esthétiques adaptées à différentes applications artistiques ou industrielles.

La mise en oeuvre du procédé sur des canevas plans ou volumiques constitués de grillages légers ou de structures métalliques de formes variées, permet la création « ex nihilo » d'éléments architecturaux paysagers ou décoratifs, de rochers ou de décors artificiels semi-submergés ou même aériens, grâce à la technique d'arrosage artificiel cyclique des parties hors d'eau par de l'eau de mer, de l'eau saumâtre ou par de l'eau douce additionnée des éléments minéraux désagrégés tels que silicates, carbonate de calcium, chlorure de magnésium que l'on trouve dans l'eau de mer, comme décrit précédemment.

En résumé, l'invention se rapporte à un procédé de régulation de la formation d'un Géo-ciment/Géo-béton Naturel, permettant d'en contrôler et d'en optimiser l'efficacité pour un emploi dans la stabilisation du trait de côte et la création ou la consolidation d'ouvrages en eau profonde, en bord de mer, en eau douce ou saumâtre, ou même hors d'eau.

Les traits techniques de l'invention sont les suivants :
Procédé de contrôle de la formation du Géo-ciment/Géo-béton Marin Naturel caractérisé en ce que les processus électrochimiques mis en oeuvre sont commandés par une régulation des courants de polarisation
Selon une réalisation, le procédé est caractérisé en ce que la régulation est pilotée par des capteurs, mesurant notamment la salinité, la composition et la température de l'électrolyte, le pH au voisinage immédiat de la structure, le potentiel de polarisation/ECS de la structure ou d'un barreau témoin, éventuellement et suivant la configuration, la vitesse de l'électrolyte, et pour certaines configurations, la pression et le degré hygrométrique. D'autres capteurs mesurent la compacité et la dureté du dépôt.

Selon une réalisation, le procédé est caractérisé en ce que cette régulation produit directement en fonction des valeurs des paramètres relevées et durant des cycles de différentes périodes, des courants présentant des variations programmées des grandeurs électriques, notamment la fréquence, la tension, le champ électrique et l'intensité.

Selon une réalisation, le procédé est caractérisé en ce que, pour certains cycles, la régulation provoque l'inversion du sens du courant de protection, la partie cathodique du système devenant anodique et la partie anodique devenant cathodique pendant la durée d'un tel cycle.

Les régulations de plusieurs sites distants peuvent être pilotées à distance par un système expert intégrant l'ensemble des données relevées.

Les courants de polarisation cathodique de la structure peuvent être délivrés par différents types de générateurs en particulier des générateurs de courant continu alimentés en courant alternatif, des panneaux solaires, des éoliennes, des générateurs marémoteurs ou actionnés par la houle.

La structure cathodique du système peut être constituée d'une ou de plusieurs bandes de grillage métallique nu ou recouvert d'un autre métal ou d'oxydes métalliques, à mailles de tailles différentes suivant les cas, ou en métal déployé ou ajouré, nu ou recouvert de métal ou d'oxydes, cette structure cathodique étant fixée sur l'ouvrage à consolider ou à restaurer, soit à sa base, soit à mi hauteur, soit étalée et fixée à cheval entre l'ouvrage et la base sur laquelle celui-ci repose.

La structure métallique peut constituer une sorte de brise-lames constitué de grillage fort ou de plaques de métal déployé ou largement ajouré. Ladite structure a une forme permettant, d'une part, de dévier partiellement les vagues et la houle en leur imprimant une composante de vitesse verticale, et d'autre part, de laisser filtrer une partie de leur eau à travers ses orifices afin de casser le mouvement initial et d'amortir la puissance horizontale destructrice des vagues et de la houle particulièrement au pied des falaises et des ouvrages à la mer.

La structure cathodique peut être incluse en sandwich dans une enveloppe, sous la forme d'un sac semi-étanche pouvant être rempli de sable, de tous les types de sels que l'on trouve dissous dans l'eau de mer, des constituants habituels du mortier, du ciment ou du béton, de matières minérales, organiques ou synthétiques, notamment liège, résidus de bois, laine de roche, laine de verre, ou d'éléments plastiques, notamment polyéthylène, polystyrène, plastique bulle, permettant de former un ballast de faible densité, éventuellement inférieure à celle de l'eau.

La structure cathodique et, le cas échéant, son enveloppe contenant un ballast peuvent être soit ensouillées au fond, soit déposées et éventuellement fixées, par exemple au moyen de pitons et de tire fonds métalliques, sur un fond sablonneux ou rocheux, horizontal, oblique ou vertical, soit suspendues en pleine eau et retenues par des bouées et des cordages ou des câbles, soit posées, accrochées ou insérées dans des parties aériennes d'ouvrages à protéger qui ne sont jamais, ou seulement épisodiquement, au contact avec l'eau de mer ou un électrolyte.

On peut associer à l'ensemble des dispositifs précédents, un système cyclique et régulé d'arrosage artificiel alimenté par de l'eau de mer, de l'eau saumâtre ou de l'eau ordinaire additionnée des éléments minéraux désagrégés que l'on trouve dans l'eau de mer, notamment silicates, aluminates, carbonates de calcium, chlorure de fer et de magnésium, magnésie. L'arrosage à partir de cette eau chargée d'éléments minéraux est effectué sur la structure cathodique, les parois et toutes les parties de l'ouvrage à consolider qui ne sont pas immergées ou en contact fréquent ou permanent avec un électrolyte.

Le procédé peut être combiné à l'action organique de certaines algues coralliennes notamment les algues lithothamniées dont la production de calcaire accélère le processus de formation du Géo-ciment/Géo-béton Marin Naturel, en particulier pour le rehaussement de récifs coralliens ou d'atolls volcaniques faiblement recouverts par l'eau des océans.

Ainsi, l'invention concerne de façon générale un procédé de formation de ciment ou béton par électrolyse d'un milieu saumâtre dans lequel l'électrolyse précipite du carbonate de calcium et de l'hydroxyde de magnésium, ce procédé comprenant :
- une première étape au cours de laquelle on alimente les électrodes de façon à polariser la cathode afin de conférer au pH du milieu saumâtre une première valeur telle que le carbonate de calcium et l'hydroxyde de magnésium se déposent progressivement sur la cathode, cette étape étant telle que le dépôt comprend une proportion importante d'hydroxyde de magnésium,
- une seconde étape au cours de laquelle on contrôle l'alimentation des électrodes de façon telle que le pH du milieu saumâtre prenne une seconde valeur, inférieure à celle obtenue au cours de la première étape, cette seconde valeur permettant la dissolution de l'hydroxyde de magnésium, cette seconde étape ayant une durée suffisante pour permettre l'obtention d'un dépôt contenant une quantité de carbonate de calcium sensiblement supérieure à la quantité d'hydroxyde de magnésium.

Selon une réalisation, le procédé comprend l'étape d'apporter au voisinage de la cathode des constituants de ciment et/ou de mortier et/ou de béton, le ciment, le mortier et le béton étant de type aérien ou hydraulique. Dans ce cas, on peut ajouter aux constituants au moins un des éléments compris dans le groupe comprenant : des sédiments, des graviers, du sable, des algues coralliennes, notamment des algues lithothamniées, ou des coraux, et des ajouts permettant de réaliser un ciment ou béton de faible densité, voisine de 1 ou inférieure à 1.

Les constituants et leurs ajouts éventuels sont, par exemple, disposés dans une enveloppe entourant la cathode.

Selon une réalisation, on impose une loi de variation, en fonction du temps, de la densité de courant ou du potentiel de la cathode permettant d'optimiser la dureté et la durabilité du ciment obtenu. La loi de variation est, par exemple, une loi périodique avec une période correspondant approximativement à celle des marées.

Dans une réalisation, on fait dépendre le potentiel de la cathode ou la densité de courant, d'une part, d'une mesure de pH du milieu saumâtre et, d'autre part, de la température de ce milieu.

On peut aussi faire dépendre le potentiel de la cathode ou la densité de courant d'au moins l'un des paramètres supplémentaires suivants : la composition du milieu saumâtre, la salinité de ce milieu, la turbidité du milieu, et la topologie de l'environnement

Selon une réalisation, la cathode baigne dans un milieu aqueux, notamment un milieu marin.

En variante, on arrose périodiquement la cathode par le milieu saumâtre. Dans ce cas la seconde étape, au cours de laquelle on impose un pH de valeur inférieure à la valeur du pH lors de la première étape, peut comprendre une étape d'arrosage par un milieu aqueux permettant d'accélérer la dissolution de l'hydroxyde de magnésium.

Dans une réalisation, on remplit les fissures d'un ouvrage préalablement réalisé en béton selon le procédé défini ci-dessus.

L'invention concerne aussi une application du procédé ainsi défini à au moins l'une des utilisations comprises dans le groupe comprenant: la stabilisation du trait de côte, telle que des plages, dunes ou falaises, la consolidation d'ouvrages artificiels ou de polders, l'enrochement naturel ou artificiel, l'endigage de rivières côtières, la création de fermes sous-marines, la consolidation de plateformes pétrolières, le rehaussement d'îlots et la réalisation d'obstacles brise-houle.

La divulgation concerne un ciment ou béton présentant les caractéristiques de celui obtenu par le procédé défini ci-dessus. De préférence, dans ce ciment ou béton, le rapport en masse entre le carbonate de calcium et l'hydroxyde de magnésium est compris entre 5 et 20.

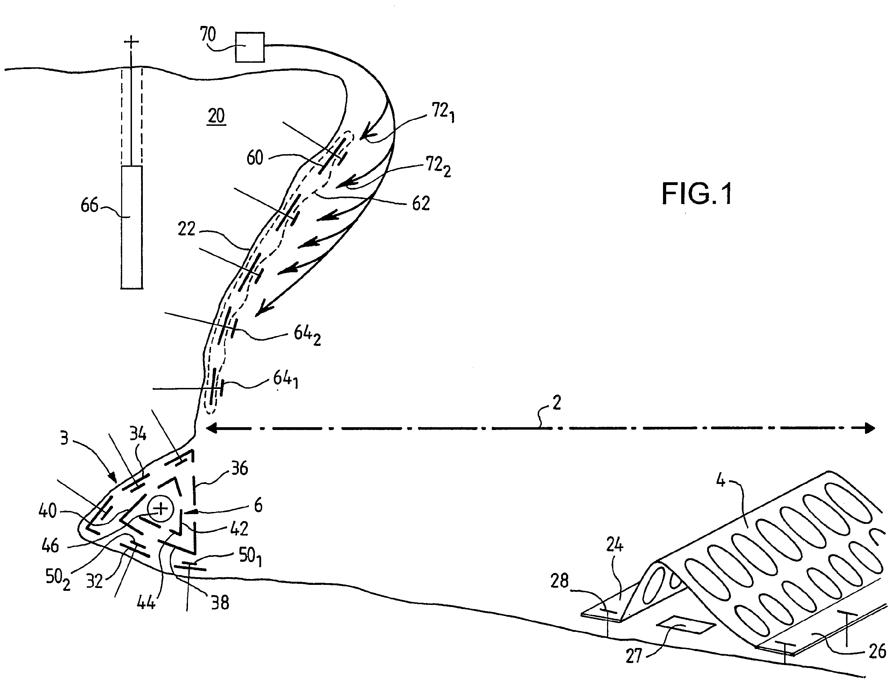

La figure 1 représente trois exemples d'applications du procédé selon l'invention.

Dans ces exemples, il s'agit de protéger une falaise 20 dont la partie basse est creusée par l'effet de la mer qui a, du fait de la houle, formé une cavité 3. Le niveau maximum de la mer a pour référence 2, juste au-dessus de la cavité 3.

Au-dessus du niveau 2, la falaise 20 a subi une érosion comme représenté par la zone 22 en dévers.

Bien entendu, dans les trois exemples, on prévoit des structures cathodiques métalliques reliées à la borne négative d'un générateur de courant, sur lesquelles viennent se déposer le ciment ou le béton ainsi qu'une ou plusieurs anodes reliées à la borne positive du générateur.

On prévoit ainsi, en premier lieu, un obstacle brise houle 4, appliqué sur le fond de la mer à quelques dizaines de mètres du pied de la falaise 20 pour limiter l'érosion au pied de cette falaise 20 ; on prévoit en second lieu, un élément destiné au remplissage de la cavité 3 et en troisième lieu, un élément de renforcement de la partie haute de la falaise pour limiter le dévers.

L'obstacle brise houle 4 a été représenté avant le dépôt de ciment ou béton. La structure cathodique est constituée d'un métal ajouré (ou déployé) en forme de V renversé. Le V renversé présente des pattes 24, 26 appliquées sur le fond de la mer grâce à des tire-fonds d'ancrage 28. Un câble unipolaire (non montré) assure la liaison électrique entre la structure et la borne négative d'un générateur de courant.

Une ou plusieurs anodes plaques 27 sont ancrées sur le fond entre les pattes 24, 26 de l'obstacle et reliées par un câble unipolaire (non montré) à isolation renforcée à la borne positive du générateur de courant.

Après application du procédé selon l'invention, on obtient un obstacle brise houle en béton naturel avec une armature métallique.

Pour remplir la cavité 3, on prévoit une structure cathodique métallique 6 repliée avec deux faces 32, 34 appliquées contre les faces en coin de la cavité 3, une face 36 pratiquement en prolongement de la paroi 22 de la falaise et d'autres faces 38, 40, 42, 44 repliées pour remplir la cavité 3. Cette structure est reliée à la borne négative d'un générateur de courant. L'anode 46 est, par exemple, un câble anode qui se trouve placé en partie centrale et relié à la borne positive du générateur de courant. Des tire-fonds 50₁, 50₂, etc. appliquent les faces 32 et 34 contre les faces des parois de la cavité 3.

Après application du procédé selon l'invention, la cavité 3 est remplie de ciment ou de béton conforme à l'invention et renforcé par l'armature repliée.

Pour renforcer la paroi 22 de la falaise, on applique contre cette paroi 22 une armature cathodique métallique 60 disposée dans une enveloppe perméable 62 qui contient un ballast composé de minéraux, de sels et de divers constituants du béton. Des tire-fonds 64₁, 64₂ sont prévus pour ancrer l'ensemble 60, 62 contre la paroi 22 qui n'est pas baignée par la mer.

L'anode 66 est enfoncé dans le sol en haut de la falaise 20. Elle est reliée par un câble unipolaire à la borne positive d'un générateur de courant continu. L'armature métallique 60 est reliée par un câble unipolaire à la borne négative du générateur.

Pour permettre la formation du béton, l'électrolyte est apporté par un système d'arrosage comportant en partie haute de la falaise un réservoir 70, alimenté, par exemple, par pompage d'eau de mer. Le système d'arrosage comporte, reliées à ce réservoir 70, des buses 72₁, 72₂, etc. réparties pour arroser l'enveloppe perméable, et par conséquent son contenu, ainsi que la partie en dévers de la falaise. Ainsi, on obtient, après application du procédé conforme à l'invention, un béton naturel qui s'applique contre les parties érodées, pour limiter les dévers et renforcer la cohésion de la falaise.

## Revendications

1. Procédé pour la formation de ciment ou de béton par électrolyse d'un milieu saumâtre électrolytique comprenant du carbonate de calcium (CaC03) et de l'hydroxyde de magnésium (Mg(OH)2), lequel procède comprend les étapes consistant à :
a. disposer dans le milieu électrolytique une structure métallique conductrice, ou cathode, reliée à la borne négative d'un générateur de courant électrique ;
b. disposer dans le milieu électrolytique une anode reliée à la borne positive d'un générateur;
c. installer un capteur apte à mesurer le pH et la température du milieu électrolytique à proximité de la structure ;
d. alimenter les électrodes de façon à polariser la cathode afin de conférer au pH du milieu électrolytique une première valeur proche de 9,4 ;
e. abaisser la densité du courant de polarisation jusqu'à l'obtention d'un pH du milieu électrolytique compris entre 8,35 et 9,4 ;
f. l'étape e) étant poursuivie selon un temps fonction de la température jusqu'à ce que le ratio CaC03 /Mg(OH)2 soit compris entre 5 et 20 ;
g. les étapes d) à f) étant répétées en imposant une loi de variation de la densité de courant selon des cycles.

2. Procédé selon la revendication 1, **caractérise en ce que** l'étape c) comprend l'installation d'une pluralité de capteurs aptes à mesurer la salinité et la composition de l'électrolyte et aptes à mesurer le potentiel de polarisation de la structure et que l'étape g) comprend le pilotage de l'intensité et de la tension du courant de polarisation en fonction des mesures desdits capteurs.

3. Procédé selon la revendication 2, caractérise en ce l'intensité du courant de polarisation évolue entre 0,1 ampère et quelques dizaines d'ampères et que sa tension évolué entre 0.1 volt et quelques dizaines de volts.

4. Procédé selon la revendication 3, **caractérisé en ce qu'**au cours de l'étape g) l'intensité et la tension du courant de polarisation varient selon des cycles sinusoïdaux dont la période est comprise entre 1 heure et 12 heures.

5. Procédé selon la revendication 1, **caractérisé en ce qu'**il comprend une étape consistant à : h. apporter au voisinage de la structure cathodique un ajout comprenant : des sédiments ou des graviers ou du sable ou des coquillages ou des galets ou des algues coralliennes, notamment des algues lithothamniées, ou des coraux.

6. Procédé selon la revendication 5, dans lequel l'étape h) comprend un ajout comprenant : des matériaux volcaniques, tels que de la pierre ponce ou de la pouzzolane, ou du polystyrène, ou du plastique bulle, ou du polyéthylène.

7. Procédé selon la revendication 5, dans lequel l'étape g) comprend l'ajout de ciment ou de mortier ou de béton de type aérien ou hydraulique.

8. Procédé selon les revendications 5 à 7, dans lequel les ajouts-sont disposés dans une enveloppe semi-étanche entourant la cathode.

9. Procédé selon l'une des revendications précédentes, dans lequel le milieu électrolytique est un milieu aqueux, notamment un milieu marin dans lequel la cathode baigne.

10. Procédé selon l'une des revendications 1 à 8, dans lequel la cathode est aérienne ou ne baigne pas en permanence dans le milieu électrolytique, comprenant une étape consistant à :
i. arroser périodiquement la structure cathodique par le milieu électrolytique.

11. Procédé selon la revendication 9, dans lequel l'étape g) est réalisée selon des cycles correspondant à des marées du milieu électrolytique.

12. Procédé selon la revendication 10, dans lequel l'étape i) est réalisée au cours de l'étape f) et comporte l'arrosage de la structure cathodique par un milieu aqueux permettant la dissolution de l'hydroxyde de magnésium.

13. Application du procédé selon l'une quelconque des revendications précédentes à la stabilisation d'un trait de côte, ou à la consolidation d'un ouvrage artificiel ou d'un polder, ou à l'endigage d'une rivière côtière, ou à la création d'une ferme sous-marine, ou à la consolidation d'une plate- forme pétrolière, ou au rehaussement d'un ilot ou à la réalisation d'un obstacle brise houle.

## Patentansprüche

1. Verfahren zur Herstellung von Zement oder Beton durch Elektrolyse eines brackigen Elektrolytmediums umfassend Calciumcarbonat (CaC0₃) und Magnesiumhydroxid (Mg(OH)₂), wobei das Verfahren umfasst die Schritte bestehend aus:
a. Anordnen einer leitenden Metallstruktur oder einer Kathode im Elektrolytmedium, welche mit dem Minuspol eines Stromgenerators verbunden wird;
b. Anordnen einer Anode im Elektrolytmedium, welche mit dem Pluspol eines Generators verbunden wird;
c. Installation einer Sonde, welche dazu geeignet ist, den pH-Wert und die Temperatur des Elektrolytmediums in der Umgebung der Struktur zu messen;
d. Versorgen der Elektroden, so dass die Kathode polarisiert wird, um einen pH des Elektrolytmediums mit einem ersten Wert nahe 9,4 einzustellen;
e. Absenken der Dichte des Polarisationsstroms, bis ein pH-Wert des Elektrolytmediums zwischen 8,35 und 9,4 erreicht wird;
f. der Schritt e) wird gemäß einer Zeit-Temperatur Funktion durchgeführt, bis das Verhältnis CaC0₃/Mg(OH)₂ zwischen 5 und 20 liegt;
g. die Schritte d) und f) werden gemäß einer auferlegten, vorgegebenen Dichteänderung des Stroms in Zyklen wiederholt.

2. Verfahren gemäß Anspruch 1, **dadurch gekennzeichnet, dass** der Schritt c) die Installation einer Vielzahl von Sonden umfasst, welche dazu geeignet sind, den Salzgehalt und die Zusammensetzung des Elektrolyten sowie das Polarisationspotential der Struktur zu messen, und dadurch, dass Schritt g) die Steuerung der Stärke und der Spannung des Polarisationsstroms in Abhängigkeit von den Messungen der Sonden umfasst.

3. Verfahren gemäß Anspruch 2, **dadurch gekennzeichnet, dass** die Polarisationsstromstärke zwischen 0,1 Ampere und einigen Dutzend Ampere und die Spannung zwischen 0,1 Volt und einigen Dutzend Volt liegt.

4. Verfahren gemäß Anspruch 3, **dadurch gekennzeichnet, dass** während des Schrittes g) die Stärke und die Spannung des Polarisationsstroms gemäß Sinuszyklen variieren, deren Periode zwischen 1 Stunde und 12 Stunden liegt.

5. Verfahren gemäß Anspruch 1, **dadurch gekennzeichnet, dass** er einen Schritt umfasst bestehend aus:
h. Einführen eines Zusatzes benachbart der kathodischen Struktur, welcher umfasst : Sediment oder Kies oder Sand oder Muscheln oder Kiesel oder Korallenalgen, insbesondere Lithothamnions-Algen, oder Korallen.

6. Verfahren gemäß Anspruch 5, wobei der Schritt h) einen Zusatz umfasst, welcher umfasst: vulkanische Materialen, wie Bimsstein oder Puzzolane, oder Styropor oder Luftpolsterfolie oder Polyethylen.

7. Verfahren gemäß Anspruch 5, wobei der Schritt g) den Zusatz von Zement oder Mörtel oder Beton des Typs Porenbeton oder hydraulischer Beton umfasst.

8. Verfahren gemäß den Ansprüchen 5 bis 7, wobei die Zusätze in einer halbdichten Hülle angeordnet werden, welche die Kathode umgibt.

9. Verfahren gemäß einem der vorstehenden Ansprüche, wobei das Elektrolytmedium ein wässriges Medium ist, insbesondere ein maritimes Medium, in das die Kathode getaucht wird.

10. Verfahren gemäß einem der Ansprüche 1 bis 8, wobei die Kathode an der Luft ist oder nicht permanent in dem Elektrolytmedium getaucht wird, umfassend einen Schritt bestehend aus:
i. regelmäßiges Befeuchten der Kathodenstruktur durch das Elektrolytmedium.

11. Verfahren gemäß Anspruch 9, wobei der Schritt g) in Zyklen ausgeführt wird, welche den Gezeiten des Elektrolytmediums entsprechen.

12. Verfahren gemäß Anspruch 10, wobei der Schritt i) während des Schritts f) ausgeführt wird und die Befeuchtung der Kathodenstruktur durch ein wässriges Medium umfasst, welches die Auflösung des Magnesiumhydroxides ermöglicht.

13. Verwendung des Verfahrens gemäß einem der vorstehenden Ansprüche zur Stabilisierung eines Küstenabschnittes oder zur Konsolidierung eines künstlichen Bauwerkes oder eines Polders oder zur Eindämmung eines küstennahen Flusses oder zur Errichtung einer Unterwasser-Farm oder zur Konsolidierung einer Bohrplattform oder zur Anhebung einer kleinen Insel oder zur Errichtung eines Brandungsbrechers.

## Claims

1. Method for forming cement or concrete by electrolysis of an electrolytic brackish medium comprising calcium carbonate (CaCO₃) and magnesium hydroxide (Mg(OH)₂), said method comprising the steps consisting in:
a. placing a conductive metallic structure, or cathode, connected to the negative terminal of an electric current generator, in the electrolytic medium;
b. placing an anode connected to the positive terminal of a generator in the electrolytic medium;
c. installing a sensor capable of measuring the pH and the temperature of the electrolytic medium near the structure;
d. powering the electrodes so as to polarise the cathode in order to give the pH of the electrolytic medium an initial value close to 9.4;
e. lowering the density of the polarisation current until a pH value between 8.35 and 9.4 is obtained in the electrolytic medium;
f. step e) being continued for a time which depends on the temperature until the CaCO₃ / Mg(OH)₂ ratio is between 5 and 20;
g. steps d) to f) being repeated while imposing a law of variation of the current density according to cycles.

2. Method according to claim 1, **characterised in that** step c) comprises the installation of a plurality of sensors capable of measuring the salinity and the composition of the electrolyte and capable of measuring the polarisation potential of the structure and **in that** step g) comprises control of the intensity and the tension of the polarisation current according to the measurements of said sensors.

3. Method according to claim 2, **characterised in that** the intensity of the polarisation current varies between 0.1 amperes and a few tens of amperes and its tension varies between 0.1 Volts and a few tens of Volts.

4. Method according to claim 3, **characterised in that** during step g) the intensity and the tension of the polarisation current vary according to sinusoidal cycles of which the period is between 1 hour and 12 hours.

5. Method according to claim 1, **characterised in that** it comprises a step consisting in:
h. providing in the vicinity of the cathode structure an addition comprising: sediments or gravel or sand or shells or pebbles or coralline algae, particularly lithothamnium algae, or corals.

6. Method according to claim 5, in which step h) comprises an addition comprising: volcanic materials, such as pumice or pozzolan, or polystyrene, or bubble wrap, or polyethylene.

7. Method according to claim 5, in which step g) comprises the addition of cement or mortar or aerated or hydraulic type concrete.

8. Method according to claims 5 to 7, in which the additions are placed in a semi-sealed casing surrounding the cathode.

9. Method according to one of the above claims, in which the electrolytic medium is an aqueous medium, particularly a marine medium in which the cathode is immersed.

10. Method according to one of claims 1 to 8, in which the cathode is not immersed or is not permanently immersed in the electrolytic medium, comprising a step consisting in:
i. periodically wetting the cathode structure with the electrolytic medium.

11. Method according to claim 9, in which step g) is carried out in cycles corresponding to ebbs and flows of the electrolytic medium.

12. Method according to claim 10, in which step i) is carried out during step f) and comprises the wetting of the cathode structure with an aqueous medium enabling the dissolution of the magnesium hydroxide.

13. Application of the method according to any one of the above claims to the stabilisation of a coastline, or to the consolidation of an artificial structure or a polder, or to the damming of coastal river, or to the creation of an underwater farm, or to the consolidation of an oil rig, or to the raising of an islet or to the construction of a breakwater.
